# EUROPEAN PATENT SPECIFICATION

(11) **EP 3 910 978 B1**
(45) Date of publication and mention of the grant of the patent: **10.05.2023**
(21) Application number: 20188275.0
(22) Date of filing: 29.07.2020
(51) Int. Cl.: H04W 12/12, G06F 21/55, H04W 12/122, H04L 9/40

(54) **METHOD FOR DETECTING FAKE DEVICE AND WIRELESS DEVICE CARE APPARATUS**
VERFAHREN ZUM ERKENNEN EINER GEFÄLSCHTEN VORRICHTUNG UND DRAHTLOSES VORRICHTUNGSPFLEGEGERÄT
PROCÉDÉ DE DÉTECTION DE FAUX DISPOSITIF ET APPAREIL D'ENTRETIEN DE DISPOSITIF SANS FIL

(30) Priority: 11.05.2020 KR 20200055961
(43) Date of publication of application: 17.11.2021
(73) Proprietor: Norma Inc., Seoul (KR)
(72) Inventor: JUNG, Hyunchul, Seoul (KR); SONG, Chang Nyoung, Seoul (KR)
(74) Representative: Grünecker Patent- und Rechtsanwälte PartG mbB

(56) References cited:
- US-A- 5 961 644
- US-A1- 2005 204 404
- US-A1- 2006 101 517
- US-A1- 2016 029 221

## Description

### BACKGROUND

### 1. Field

The present disclosure relates to a method for detecting a fake device and a wireless device care apparatus.
[National Research and Development Business Supporting the Present Disclosure]
[Project Number] 2019-0-00148
[Related Department] Ministry of Science and ICT
[Research Management Specialized Agency] Institute of Information & Communications Technology Planning & Evaluation (IITP)
[Research Business Title] Information Protection Core Source Business
[Research Project Title] Development of Smartphone-Associated Touch Operation System Double Convergence Security Technology for Controlling Autonomous Car
[Contribution Rate] 1/1
[Lead Institute] SAMBOMOTORS CO., LTD.
[Research Period] April 1, 2019-December 31, 2022

### 2. Description of the Related Art

Internet of Things (IoT) (hereinafter, referred to as IoT), which is one of the wireless Internet technologies, refers to technology that connects various things through wireless communication. The IoT has a risk that the Linux operating system, based on which a plurality of IoT devices operate, may be hacked by Linux worm if the Linux operating system does not guarantee high security in devices or is not appropriately updated (Dick O'Brien, 20 January 2014, "The Internet of Things: New Threats Emerge in a Connected World", Symantec). There was a case where privacy was invaded by using security vulnerability in a real IoT environment. TRENDnet that produces and sells Secure View, which is a baby monitoring camera, in U.S. has distributed their products without establishing a proper security system. As a result, videos of about 700 households were leaked by hackers and TRENDnets was sanctioned by the Federal Trade Commission.

To strengthen security of wireless Internet, technology for detecting fake devices from among devices (for example, IoT devices) constituting the wireless Internet, and technology for analyzing vulnerable points of wireless devices are being continuously researched.

As technology for detecting fake devices, technology for determining a fake device by comparing device information such as a media access control (MAC) address, a service set identifier (SSID), or a channel is disclosed in Korean Patent Registration No. 10-1563213 (October 20, 2015). However, this technology has difficulty in determining a fake device if the fake device completely forges the above-mentioned information.

Since various kinds of devices (a TV, a refrigerator, a speaker, a washer, a lamp, etc.) constitute IoT, data for analyzing vulnerable points should be individually provided according to kinds of loT devices, and vulnerable points of respective loT devices should be analyzed. Accordingly, if a kind (type) of an IoT device is not known, all kinds of data for analyzing vulnerable points should be used in sequence in order to analyze vulnerable points of the corresponding IoT device. Therefore, many computing resources and much time are required to analyze vulnerable points.

US 2016/029221 A1 relates to a behavior-based security system of a target computing device that is protected from non-benign behavior, malware, and cyber attacks by configuring the device to work in conjunction with another component such as a server to monitor the accuracy and performance of the security system, and to determine whether the system is working correctly, efficiently, or as expected. This is accomplished via the server generating artificial attack software, sending the artificial attack software to the target computing device to simulate non-benign behavior in the target computing device, such as a cyber attack, and determining whether the behavior-based security system of the target computing device responded adequately to the simulated non-benign behavior.

It is the object of the present invention to provide a method and a device that allow determining whether a target device is a fake device in an efficient way.

The invention is defined by the subject matter of the independent claims. Preferred embodiments are defined in the dependent claims.

### BRIEF DESCRIPTION OF THE DRAWINGS

The above and/or other aspects of the present disclosure will be more apparent by describing certain exemplary embodiments of the present disclosure with reference to the accompanying drawings, in which:
FIG. 1 is a view provided to explain a wireless device care system according to an embodiment of the present disclosure;
FIG. 2 is a view provided to explain a wireless device care apparatus used in the wireless device care system of FIG. 1;
FIG. 3 is a view provided to explain a fake device detection method according to an embodiment of the present disclosure; and
FIG. 4 is a view provided to explain a method for determining a type of a wireless device according to an embodiment of the present disclosure.

### DETAILED DESCRIPTION OF EMBODIMENTS

Exemplary embodiments will now be described more fully with reference to the accompanying drawings to clarify objects, other objects, features and advantages of the present disclosure. The exemplary embodiments may, however, be embodied in many different forms and should not be construed as limited to the exemplary embodiments set forth herein. Rather, the exemplary embodiments are provided so that this disclosure will be thorough and complete, and will fully convey the scope of the application to those of ordinary skill in the art.

### Definition of Terms

In the detailed descriptions of the present disclosure, the term "software" refers to technology for moving hardware in a computer, the term "hardware" refers to apparatuses or devices (a central processing unit (CPU), a memory, an input device, an output device, a peripheral device, etc.) constituting a computer, the term "step" refers to a series of processes or operations connected with one another in a time-series manner to achieve a predetermined object, the term "program" refers to a set of commands suitable to be processed by a computer, and the term "recording medium" refers to a computer-readable recording medium that has a program recorded thereon and is used to install and execute or distribute a program.

If the terms such as "first" and "second" are used to describe elements, these elements should not be limited by such terms. These terms are used for the purpose of distinguishing one element from another element only. The exemplary embodiments include their complementary embodiments.

In the detailed descriptions of the present disclosure, the singular forms "a," "an" and "the" are intended to include the plural forms as well, unless the context clearly indicates otherwise. It will be further understood that the terms "comprise" and/or "comprising," when used in this specification, do not preclude the presence or addition of one or more other components.

In the detailed descriptions of the present disclosure, the term "management" is used as a meaning including "receiving," "transmitting," "storing," "correcting," and "deleting" data.

In the detailed descriptions of the present disclosure, "an element A and/or an element B" refers to "an element A," "an element B," or "an element A and an element B."

In the detailed descriptions of the present disclosure, a "wireless terminal," a "device", or an "apparatus" is configured with a computer.

In the detailed descriptions of the present disclosure, a "computer" includes a computer processor, a memory device, an operating system, firmware, application programs, a communication unit, and other resources. Herein, the operating system operatively connects other hardware, firmware, or application programs (for example, a management program). The communication unit refers to a module including software and hardware to exchange data with the outside. In addition, the computer processor, the memory device, the operating system, the application program, the firmware, the communication unit, a peripheral device, and other resources (including hardware resources and software resources) are operatively connected with one another. The above-mentioned elements are described or illustrated in the detailed descriptions or drawings within a limit for explanation of the present disclosure.

In the detailed descriptions of the present disclosure, an element "A" transmitting information, a history, and/or data to an element "B" includes the element "A" directly transmitting to the element "B" or the element "A" transmitting to the element "B" through at least one other element.

Hereinafter, embodiments of the present disclosure will be described in detail with reference to the drawings.

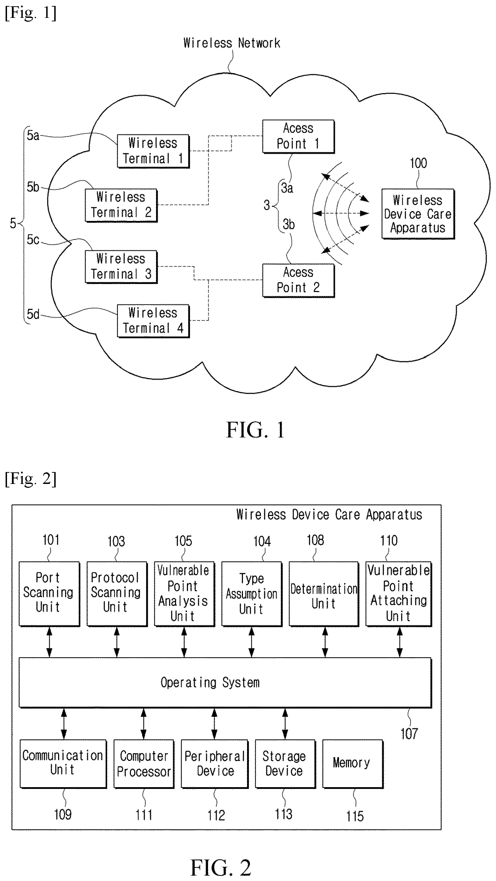

FIG. 1 is a view provided to explain a wireless device care system according to an embodiment of the present disclosure, and FIG. 2 is a view provided to explain a wireless device care apparatus used in the wireless device care system of FIG. 1.

Referring to these drawings, the wireless device care system according to an embodiment includes wireless devices 3, 5 and a wireless device care apparatus (IoT care apparatus) 100.

The wireless devices 3, 5 may communicate with one another. For example, the wireless devices 3, 5 may communicate according to short-range wireless communication technology standards such as Bluetooth or Wi-Fi.

The wireless devices 3, 5 may include access points 3 (3a, 3b) (hereinafter, referred to as AP) (hereinafter, reference numeral 3 will be used if there is no practical benefit in distinguishing reference numerals 3a, 3b), and wireless terminals 5 (5a, 5b, 5c, 5d) (hereinafter, reference numeral 5 will be used if there is no practical benefit in distinguishing reference numerals 5a, 5b, 5c, 5d). The wireless terminal 5 may be, for example, an IoT device, but is not limited thereto.

The wireless device care apparatus 100 may communicate with the wireless devices 3, 5 through Bluetooth or Wi-Fi, and may monitor and may take care of the wireless devices 3, 5 through Bluetooth or Wi-Fi communication. The wireless device care apparatus 100 may assume types of the wireless devices 3, 5, and also, may detect a fake device like a hacker from among the wireless devices 3, 5.

In the detailed descriptions of the disclosure, the fake device refers to a device that reads data from other wireless devices illegally or without a proper permission, or forges data.

The AP 3 refers to a device that connects wireless devices or wired devices to one another by using a standard protocol in a computer network. Herein, the standard protocol may be for wired communication defined by IEEE 802.3 or may be for wireless communication defined by IEEE 802.11. These standard protocols are merely an example and the present disclosure is not limited to these standard protocols.

The wireless terminals 5 may wirelessly communicate through the AP 3. In the present embodiment, the wireless device care apparatus 100 may communicate with the wireless terminal 5 through the AP 3.

The wireless device care apparatus 100 may assume a type of the AP 3, and also may assume types of the wireless terminals 5 wirelessly communicating with the AP 3.

In addition, the wireless device care apparatus 100 may determine whether the AP 3 is a fake device, and also may determine whether the wireless terminals 5 wirelessly communicating with the AP 3 are fake devices.

In addition, the wireless device care apparatus 100 may assume the type of the AP 3, and may determine whether the AP 3 is a fake device by using the assumed type. In addition, the wireless device care apparatus 100 may assume the types of the wireless terminals 5 wirelessly communicating with the AP 3, and may determine whether the wireless terminals 5 are fake devices by using the assumed types.

In the present embodiment, the number of wireless terminals 5 is 4, but is merely an example and may be larger or less than 4.

The wireless devices 3, 5 or the wireless device care apparatus 100 may receive data from an external wireless communication network (not shown) via a gateway (not shown), although this is not illustrated in FIG. 1. In addition, the wireless devices 3, 5 or the wireless device care apparatus 100 transmits data to an external network through a gateway (not shown) to transmit the data to the outside. Herein, the external network (not shown) may be a communication network that is connected to allow devices to mutually transmit and receive data, and may include a wide area network (WAN), a metropolitan area network (MAN), a local area network (LAN), and/or a personal area network (PAN).

The wireless device care apparatus 100 may perform an operation of assuming types of the wireless devices 3, 5, and an operation of detecting a fake device from among the wireless devices 3, 5 as described above. Hereinafter, these operations will be described in sequence.

### Type Assumption Operation

In the present embodiment, the wireless device care apparatus 100 may perform a port scanning operation, a protocol scanning operation, and a type assumption operation.

The port scanning operation is finding open ports of the wireless devices 3, 5. That is, the port scanning operation is an operation of identifying what port is opened for each of the wireless devices 3, 5.

The port scanning operation may be performed by technology known as a full scanning or a stealth scanning, for example. The full scanning is technology of finding an open port by establishing a complete transmission control protocol (TCP) session. The stealth scanning is a kind of half scan technology, and transmits a port identification packet and determines that a responding port is opened when a response to the port identification packet is received, and determines that the port is closed when the response is not received. The stealth scanning may be, for example, FIN, NULL, or XMASH.

The port refers to a logic unit for identifying a network service or a specific process, and a protocol using a port is, for example, a transmission layer protocol. An example of the transmission layer protocol may include a transmission control protocol (TCP) and a user datagram protocol (UDT). The ports may be identified by numbers, and these numbers are called port numbers. For example, the port number is used together with an IP address.

The port numbers may be classified into three types of ports as shown in table presented below:

**[Table 1]**

| Port Numbers | Port Types |
|---|---|
| 0-1023 | Well known ports |
| 1024-49151 | Registered ports |
| 49152-65535 | Dynamic ports |

Representative examples of well-known ports are as follows:
- Number 20: FTP (data)
- Number 21: FTP (control)
- Number 22: SSH
- Number 23: Telnet
- Number 53: DNS
- Number 80: world wide web HTTP
- Number 119: NNTP
- Number 443: HTTP of TLS/SSL methods

It will be understood by those skilled in the art that the port numbers and the port types described above are merely examples.

For the purpose of explaining the present disclosure, it is assumed that an open port of the wireless device 5a is port number 80, an open port of the wireless device 5b is port number 23, an open port of the wireless device 5c is port number 5555, and an open port of the wireless device 5d is port number 5559.

The port scanning operation is an operation of finding the open ports of the wireless devices 3, 5. For example, the wireless device care apparatus 100 may find that the open port of the wireless terminal 5a is port number 80, the open port of the wireless terminal 5b is port number 23, the open port of the wireless terminal 5c is port number 5555, and the open port of the wireless terminal 5d is port number 5559, through the port scanning operation.

The protocol scanning operation is an operation of finding a type of a protocol used in an open port. Herein, the open port may be found by the port scanning operation. For example, the wireless device care apparatus 100 finds what protocol is used in port number 80 which is the open port of the wireless terminal 5a.

In addition, the wireless device care apparatus 100 may find what the protocol used in port number 23 of the wireless terminal 5b is, what the protocol used in port number 5555 of the wireless terminal 5c is, and what the protocol used in port number 5559 of the wireless terminal 5d is, respectively.

The protocol scanning operation performed by the wireless device care apparatus 100 includes an operation of identifying a type of an open port, an operation of creating a packet to be transmitted to the open port (hereinafter, a "protocol identification packet") according to the type of the open port, an operation of transmitting the protocol identification packet to a wireless device having the open port, and an operation of identifying whether a response is received from the wireless device to which the protocol identification packet is transmitted.

The protocol identification packet may be, for example, a script.

The operation of identifying the type of the open port is an operation of identifying what the type of the open port found by the port scanning operation is. For example, the operation of identifying the type of the open port may be an operation of identifying which of a well-known port, a registered port, or a dynamic port the open port corresponds to. To perform the operation of identifying the type of the open port, data in which types of ports are classified according to port numbers (for example, table 1) (hereinafter, "port type data") should be prepared in advance. Such "port type data" may be stored and managed by the wireless device care apparatus 100.

According to an embodiment, the wireless device care apparatus 100 may find the type of the open port by referring to the "port type data." For example, the wireless device care apparatus 100 may find that port number 80 of the wireless terminal 5a and port number 23 of the wireless terminal 5b are well-known ports, and port number 5555 of the wireless terminal 5c and port number 5559 of the wireless terminal 5d are dynamic ports.

The wireless device care apparatus 100 performs the operation of creating the protocol identification packet corresponding to the type of the open port.

For example, since port number 80 of the wireless terminal 5a uses the world wide web HTTP protocol and is a well-known port, the wireless device care apparatus 100 creates a protocol identification packet by using the web HTTP protocol and transmits the protocol identification packet to the wireless terminal 5a. When there is a response to the protocol identification packet created by using the web HTTP protocol from the wireless terminal 5a, the wireless device care apparatus 100 determines that port number 80 of the wireless terminal 5a uses the web HTTP protocol.

On the other hand, when there is no response to the protocol identification packet created by using the web HTTP protocol from the wireless terminal 5a, the wireless device care apparatus 100 determines that port number 80 of the wireless terminal 5a does not use the web HTTP protocol. In this case, the wireless device care apparatus 100 creates a protocol identification packet by using another protocol different from the world wide web HTTP protocol, and then transmits the protocol identification packet to the wireless terminal 5a.

When there is a response to the protocol identification packet created by using another protocol different from the web HTTP protocol from the wireless terminal 5a, the wireless device care apparatus 100 determines that port number 80 of the wireless terminal 5a uses another protocol. When there is no response to the protocol identification packet created by using another protocol different from the web HTTP protocol from the wireless terminal 5a, the wireless device care apparatus 100 determines that port number 80 of the wireless terminal 5a does not use another protocol. Thereafter, the wireless device care apparatus 100 creates a protocol identification packet by using still another protocol and transmits the protocol identification packet until a response is received from the wireless terminal 5a. The wireless device care apparatus 100 finds a type of a protocol really used in each of the open ports of the wireless devices 3, 5 in the above-described method.

The wireless device care apparatus 100 performs the type assumption operation for assuming respective types of the wireless devices 3, 5, by using at last one result of the result of performing the port scanning operation and the result of performing the protocol scanning operation described above.

According to an embodiment, the type assumption operation performed by the wireless device care apparatus 100 may include an operation of assuming a type of a service from the type of the protocol found as a result of performing the protocol scanning operation, and an operation of assuming a type of the wireless device from the assumed type of the service.

The operation of assuming the type of the service from the type of the protocol is based on an experience that a protocol to be mainly used for each service is already defined. For example, a real time streaming protocol (RTSP), a real-time transport protocol (RTP), or a real-time transport control protocol (RTCP) mainly support a streaming service. That is, when data which defines services supported by respective protocols (hereinafter, "protocol-service mapping data") is prepared, the wireless device care apparatus 100 may assume the type of the service from the type of the protocol by using the "protocol-service mapping data." The "protocol-service mapping data" may be stored and managed by the wireless device care apparatus 100.

The operation of assuming the type of the wireless device 3, 5 from the type of the service is also based on an experience that a service to be mainly used for each type of wireless device is already defined. For example, the RTSP, RTP, or RTCP mainly support a streaming service, and the streaming service is provided by a wireless device like an IP TV That is, when data which defines types of wireless devices mainly provided for respective services (hereinafter, "service-type mapping data") is prepared, the wireless device care apparatus 100 may assume the type of the wireless device from the type of the service by using the "service-type mapping data." The "service-type mapping data" may be stored and managed by the wireless device care apparatus 100.

The response to the protocol identification packet may include at least one of banner information and service information of the wireless device 3, 5.

The banner information included in response to the protocol identification packet typically includes data indicating what type of an operating system is used in the wireless device 3, 5. The wireless device care apparatus 100 may find the type of the service or may assume the type of the wireless device 3, 5 when the type of the operating system is known.

Examples of the operating system used in the wireless device 3, 5 may include Tizen, Brillo, Fuchsia, or LiteOS. Herein, Tizen is an open source mobile operating system for supporting a portable device such as a mobile phone, or a wireless device such as a TV, a refrigerator, Brillo is an embedded operating system based on Android announced by Google, Fuchsia is an operating system which is being developed by Google to support an embedded system, a PC, a smartphone, a wireless device, and LiteOS is an operating system which was developed by Huawei to support various wireless devices such as a smart home, a wearable device, or a smart car.

The service information included in the response to the protocol identification packet typically includes data indicating what type the wireless device is. For example, the service information may include data like 'My iPone' and such data is information directly indicating the type of the wireless device.

According to an embodiment, the type assumption operation performed by the wireless device care apparatus 100 uses at least one of the banner information and the service information of the wireless device, and at least one result of the result of performing the port scanning operation and the result of performing the protocol scanning operation described above.

For example, the type assumption operation performed by the wireless device care apparatus 100 includes a first assumption operation, a second assumption operation, a comparison operation, and a type determination operation.

The first assumption operation is an operation of assuming the type of the service from the type of the protocol obtained by the protocol scanning operation. Regarding the first assumption operation, reference may be made to the descriptions of the RTSP, RTP or RTCP.

The second assumption operation is an operation of assuming the type of the service by using at least one of the banner information and the service information of the wireless device 3, 5. Regarding the second assumption operation, reference may be made to the descriptions of Tizen, Brillo, Fuchsia, or LiteOS and the descriptions of My iPhone.

The comparison operation is an operation of comparing the type of the service assumed by the first assumption operation and the type of the service assumed by the second assumption operation.

The type determination operation may an operation of determining the type of the wireless device 3, 5 from the type of the service assumed by the second assumption operation when the type of the service assumed by the first assumption operation and the type of the service assumed by the second assumption operation are different from each other, and of determining the type of the wireless device 3, 5 from the type of the service assumed by the first assumption operation or the second assumption operation when the type of the service assumed by the first assumption operation and the type of the service assumed by the second assumption operation are the same as each other.

When there are not the banner information and the service information of the wireless device 3, 5, or there is no data for assuming the type of the service in the banner information and the service information, the type assumption operation may include the first assumption operation and the type determination operation. That is, the type assumption operation may be performed only with the first assumption operation and the type determination operation without performing the second assumption operation and the comparison operation.

In another example, the wireless device care apparatus 100 may perform a port scanning operation, a protocol scanning operation, a type assumption operation, and a reliability calculation operation. Herein, since the port scanning operation, the protocol scanning operation, and the type assumption operation are the same as those described above, the reliability calculation operation will be described.

The reliability calculation operation is an operation of calculating accuracy of the type of the wireless device 3, 5 assumed by the type assumption operation as a numerical value.

For example, when the type of the service assumed by the first assumption operation and the type of the service assumed by the second assumption operation are the same as each other, the reliability calculation operation may calculate the reliability of the type of the wireless device determined from the type of the service as ranging from 90% to 100%.

In addition, when the type of the service assumed by the first assumption operation and the type of the service assumed by the second assumption operation are different from each other, the reliability calculation operation may calculate the reliability of the type of the wireless device determined from the type of the service assumed by the second assumption operation, as ranging from 80% to 90%.

In addition, when the type assumption operation is performed with the first assumption operation and the type determination operation without performing the second assumption operation and the comparison operation, the reliability calculation operation may calculate the reliability of the type of the wireless device assumed by such a type assumption operation as ranging from 70% to 80%.

The numerical values used in the reliability calculation operation described above are merely examples and the present disclosure is not limited to those numerical values. The present disclosure may be configured by those skilled in the art to calculate reliability of other numerical values by reflecting the result of performing the port scanning operation, the result of performing the protocol scanning operation, and a degree of using the banner information and the service information of the wireless device.

### Fake Device Detection Operation

In the present embodiment, the wireless device care apparatus 100 may perform a fake device detection operation with respect to the wireless devices 3, 5.

For convenience of explanation of the present disclosure, a device that is a target for determining whether it is a fake device will be referred to as a "target wireless device" or "target device."

The wireless device care apparatus 100 may detect whether each of the wireless devices 3, 5 is a fake device.

For example, the wireless device care apparatus 100 may determine whether the AP 3a from among the wireless devices 3, 5 is a fake device, first, and then may determine whether the AP 3b is a fake device, may determine whether the wireless device 5a is a fake device, may determine whether the wireless device 5b is a fake device, may determine whether the wireless device 5c is a fake device, and then may determine whether the wireless device 5d is a fake device. Herein, the sequence described above is merely an example, and those skilled in the art may determine a sequence according to a situation when embodying the present disclosure.

A vulnerable point attacking unit 110 of the wireless device care apparatus 100, which will be described below, attacks a vulnerable point according to a type of the target wireless device which is a target for determining whether it is a fake device, and a determination unit 108 determines whether the target wireless device is a fake device, according to whether the attack on the target wireless device succeeds.

For example, when the AP 3a is a "target wireless device," the wireless device care apparatus 100 may determine whether the AP 3a is a fake device according to whether an attack on a vulnerable point that the AP 3a has succeeds. That is, when the attack on the vulnerable point that the AP 3a has succeeds, the wireless device care apparatus 100 determines that the AP 3a is not the fake device, and, when the attack on the vulnerable point that the AP 3a has does not succeed, the wireless device care apparatus 100 determines that the AP 3a is the fake device.

The wireless device care apparatus 100 according to an embodiment may select a vulnerable point according to the type of each of the wireless devices 3, 5, may attack the wireless devices 3, 5 by using the selected vulnerable points, and may detect a fake device from among the wireless devices 3, 5 based on the result of attacking.

The wireless device care apparatus 100 according to another embodiment may assume the respective types of the wireless devices 3, 5, may attack vulnerable points corresponding to the assumed types, and may determine a fake device from among the wireless devices 3, 5, based on the result of attacking.

The wireless device care apparatus 100 according to still another embodiment may analyze respective vulnerable points of the wireless devices 3, 5, may attack the vulnerable points of the wireless devices 3, 5, and may detect a fake device from among the wireless devices 3, 5 based on the result of attacking.

In the above-described embodiments, the wireless device care apparatus 100 may generate a vulnerable point attacking message according to the type of the wireless device 3, 5 with reference to data in which vulnerable points are matched with types ("type-vulnerable point matching data"). The type-vulnerable point matching data may be stored and managed by a memory device (not shown) included in the wireless device care system, or may be stored and managed by a storage device 113, which will be described below, provided in the wireless device care apparatus 100. Alternatively, the type-vulnerable point matching data may be stored and managed by an external memory device (not shown) that the wireless device care apparatus 100 is communicably connected with to access.

In the above-described embodiments, the operation of selecting the vulnerable point according to the type of the wireless device 3, 5 may be selecting at least one of the vulnerable points that the type of the target wireless device has. For example, when the target wireless device is of a type having a plurality of vulnerable points, the wireless device care apparatus 100 may select any one of the plurality of vulnerable points and may attack the target wireless device.

In the above-described embodiments, the operation of attacking the vulnerable point of the wireless device 3, 5 may be, for example, an operation of the wireless device care apparatus 100 transmitting the vulnerable point attacking message to the target wireless device.

In the above-described embodiments, the wireless device care apparatus 100 may determine that the target wireless device is not the fake device when the target wireless device responds to the attack on the vulnerable point, and may determine that the target wireless device is the fake device when the target wireless device does not respond to the attack on the vulnerable point.

Hereinafter, vulnerable points that the wireless devices have, and vulnerable point attacking messages will be described by way of an example.

For example, the AP 3a may be a router that has the following type of vulnerable point:
- Vulnerable point: An unauthorized attacker can access "/category_view.php" URL by the HTTP GET method.
- Vulnerable point attacking message: GET/category_view.php

In another example, the AP 3b may be a router that has the following type of vulnerable point:
- Vulnerable point: An unauthorized attacker can access "/mydlink/get_TriggedEventHistory.asp" URL by the HTTP GET method.
- Vulnerable point attacking message: GET/mydlink/get_TriggedEventHistory.asp

In still another example, the AP 3a may be a router that has the following type of vulnerable point:
- Vulnerable point: An unauthorized attacker can access "/router_info.xml?section=wps" URL by the HTTP GET method, and can obtain information of a PIN and a MAC address of the AP 3a.
- Vulnerable point attacking message: GET/router_info.xml?section=wps

In yet another example, the AP 3b may be a router that has the following type of vulnerable point:
- Vulnerable point: An unauthorized attacker may insert a script syntax into data when accessing "/wpsacts.php" URL by the HTTP POST method.
- Vulnerable point attacking message: GET/wpsacts.php

In further example, the wireless device 5a may be a digital video recorder (DVR) that has the following type of vulnerable point:
- Vulnerable point: Backdoor of a default/tluafed account exists
- Vulnerable point attacking message: POST/Login.htm

In still further example, the wireless device 5b may be a DVR that has the following type of vulnerable point:
- Vulnerable point: When an unauthorized user accesses "/device.rsp?opt=user&cmd=list" URL by the HTTP GET method, an administrator account may be leaked as a plain text.
- Vulnerable point attacking message: GET/device.rsp?opt=user&cmd=list

According to embodiments, the wireless devices may be treated as different types if their vulnerable points are different, even if the wireless devices have the same type of function. For example, the above-described routers may be distinguished as different types of wireless devices since their vulnerable points are different from one another. In addition, the above-described DVRs are distinguished as different types of wireless devices if their vulnerable points are different from one another. In another example, the wireless devices 3, 5 may be treated as different types if firmware is different, even if the manufacturers of the wireless devices 3, 5 are the same and the wireless devices are the same type of devices.

According to an embodiment, the "type-vulnerable point matching data" may be data in which vulnerable points are matched with types of wireless devices. When the type-vulnerable point matching data is stored and managed, the wireless device care apparatus 100 attacks the vulnerable point of the target wireless device with reference to the type-vulnerable point matching data.

Alternatively, the type-vulnerable point matching data may be data in which "vulnerable point attacking messages" are matched with types of wireless devices.

According to another embodiment, the type-vulnerable point matching data may not be pre-stored in a recording medium like the storage device 113. In such an embodiment, the wireless device care apparatus 100 may directly generate a vulnerable point attacking message corresponding to the type of the wireless device 3, 5 (for example, when the vulnerable point attacking unit 110 is configured to directly generate a vulnerable point attacking message according to each type).

Hereinafter, the wireless device caring apparatus 100 according to various embodiments will be described with reference to FIG. 2.

The wireless device care apparatus 100 according to a first embodiment may include a determination unit 108, a vulnerable point attacking unit 110, an operating system 107, a communication unit 109, a computer processor 111, a storage device 113, and a memory 115. According to the first embodiment, the wireless device care apparatus 100 receives information regarding a type of a target wireless device from an external device (not shown). When receiving the information regarding the type of the target wireless device, the wireless device care apparatus 100 may attack the target wireless device by using a vulnerable point corresponding to the type of the target wireless device. When receiving the information regarding the type of the target wireless device, the wireless device care apparatus 100 may receive the vulnerable point corresponding to the type. Alternatively, the wireless device care apparatus 100 may receive the information regarding the type of the target wireless device from an external device (not shown), and the vulnerable point attacking unit 110 may generate a vulnerable point attacking message according to the type.

The vulnerable point attacking unit 110 may transmit the vulnerable point attacking message to the target wireless device through the communication unit 109, and the determination unit 108 may determine whether there is a response to the vulnerable point attacking message, and then, may determine that the target wireless device is not a fake device when there is the response, and may determine that the target wireless device is a fake device when there is no response.

The operating system 107 is software that provides a hardware abstraction platform and a common system service not only to manage hardware but also to execute application software, and the storage device 113 and the memory 115 include a recording medium providing a space to store a program and to execute the program. The computer processor 1111 may be a central processing unit (CPU), and the CPU may be a control device of a computer that controls a computer system and executes computation of a program, or may be a chip having such a function embedded therein.

The memory 115 and/or the storage device 113 provides a space in which a program is stored or executed, and may store data necessary for operations of the present disclosure, such as protocol-service mapping data or service-type mapping data.

The memory 115 and/or the storage device 113 may temporarily and/or permanently store various data. For example, the memory 115 and/or the storage device 113 may store a vulnerable point attacking message.

The wire device care apparatus 100 according to a second embodiment may include a port scanning unit 101, a protocol scanning unit 103, a type assumption unit 104, a determination unit 108, a vulnerable point attacking unit 110, an operating system 107, a communication unit 109, a computer processor 111, a storage device 113, and a memory 115. Compared to the first embodiment, the second embodiment differs therefrom in that the wire device care apparatus 100 further includes the port scanning unit 101, the protocol scanning unit 103, and the type assumption unit 104. Hereinafter, the difference of the second embodiment from the first embodiment will be highlighted.

According to the second embodiment, the port scanning unit 101 performs the above-described port scanning operation. The port scanning unit 101 creates a port identification packet, transmits the port identification packet to the wireless device 3, 5 through the communication unit 109, and determines an open port in the wireless devices 3, 5 by identifying whether a response to the port identification packet is received.

The protocol scanning unit 103 performs the above-described protocol scanning operation. The protocol scanning unit 103 creates a protocol identification packet, transmits the protocol identification packet to the wireless device 3, 5 through the communication unit 109, determines whether a response to the protocol identification packet is received, and determines a protocol that is actually used in the open port.

The type assumption unit 104 performs the above-described type assumption operation.

According to an embodiment, the type assumption unit 104 uses at least one of the banner information and the service information of the wireless device 3, 5, and at least one result of the result of the operation of the port scanning unit 101 and the result of the operation of the protocol scanning unit 103.

According to another embodiment, the type assumption unit 104 uses at least one result of the result of the operation of the port scanning unit 101 and the result of the operation of the protocol scanning unit 103. Since these embodiments have been described above in detail, a detailed description thereof is omitted.

In the second embodiment, the storage device 113 and/or the memory 115 stores the result of type assumption of the type assumption unit 104. The result of type assumption is data in which a type is matched with each of the wireless devices 3, 5. The storage device 113 and/or the memory 114 may store type-vulnerable point matching data. The type-vulnerable point matching data (data in which one or more vulnerable points are matched with a type) is used to find a vulnerable point that a type of a target wireless device has.

The vulnerable point attacking unit 110 may find a vulnerable point corresponding to the type of the target wireless device with reference to the type-vulnerable point matching data, and may generate a vulnerable point attacking message. Thereafter, the vulnerable point attacking message is transmitted to the target wireless device through the communication unit 109. The determination unit 108 determines whether there is a response to the vulnerable point attacking message, and then, determines that the target wireless device is not a fake device when there is the response, and determines that the target wireless device is a fake device when there is no response.

The wire device care apparatus 100 according to a third embodiment may include a port scanning unit 101, a protocol scanning unit 103, a type assumption unit 104, a vulnerable point analysis unit 105, a determination unit 108, a vulnerable point attacking unit 110, an operating system 107, a communication unit 109, a computer processor 111, a storage device 113, and a memory 115. Compared to the second embodiment, the third embodiment differs therefrom in that the wire device care apparatus 100 further includes the vulnerable point analysis unit 105. Hereinafter, the difference of the third embodiment from the second embodiment will be highlighted.

The vulnerable point analysis unit 105 analyzes a vulnerable point of a wireless device by using vulnerable analysis data stored in the memory 115 and/or the storage device 113. When the type of the wireless device is assumed by the type assumption unit 104, the vulnerable point analysis unit 104 selects vulnerable point analysis data suitable for the type of the wireless device, and analyzes a vulnerable point of the wireless device by using the selected vulnerable point analysis data.

According to the third embodiment, type-vulnerable point matching data (data in which vulnerable points are matched with types), and the vulnerable point analysis data may be stored and managed in the memory 115 and/or the storage device 113.

The third embodiment may be embodied in at least two embodiment forms.

In the first embodiment form, a vulnerable point attacking message is generated from the result of analyzing by the vulnerable point analysis unit 105. In this embodiment form, the vulnerable point analysis unit 105 analyzes the vulnerable point of the target wireless device, and the vulnerable point attacking unit 110 generates the vulnerable point attacking message from the vulnerable point of the target wireless device analyzed by the vulnerable point analysis unit 105. Thereafter, the vulnerable point attacking unit 110 transmits the vulnerable point attacking message to the target wireless device through the communication unit 109. The determination unit 108 determines whether there is a response to the vulnerable point attacking message, and then, determine that the target wireless device is not a fake device when there is the response, and determines that the target wireless device is a fake device when there is no response.

In the second embodiment form, a vulnerable point attacking message is generated from the result of assuming by the type assumption unit 104. In this embodiment form, the type assumption unit 104 assumes the type of the target wireless device, and the vulnerable point attacking unit 110 generates the vulnerable point attacking message according to the type. Subsequent operations are the same as in the first embodiment form and thus a detailed description thereof is omitted.

The wireless device care apparatus 100 according to the third embodiment may further include a reliability calculation unit (not shown) to perform a reliability calculation operation. The reliability calculation unit (not shown) performs the above-described reliability calculation operation.

An entirety or at least a portion of the port scanning unit 101 may be configured as a program. The portion configured as the program is loaded into the memory 115 and performs the port scanning operation under control the computer processor 111. The other elements, for example, the protocol scanning unit 103, the type assumption unit 104, the vulnerable point analysis unit 105, and the reliability calculation unit (not shown) may be configured in the same way as the port scanning unit 103, and may perform their respective operations. Since the port scanning operation, the protocol scanning operations, the type assumption operations, the reliability calculation operation have been described above, a detailed description thereof is omitted.

As described above, the wire device care apparatus 100 according to the present disclosure has been described with reference to the first embodiment, the second embodiment, and the third embodiment. When the wireless device care apparatus 100 is organically combined with related-art fake device detection technology, a more exact result can be obtained. For example, when it is determined whether a target wireless device is a fake device, determination may be made, first, based on related-art technology (for example, Korean Patent Registration No. 10-1563213 (October 20, 2015), and then, a fake device may be detected by the method of the present disclosure secondly. The registered Korean patent described above discloses technology of identifying that unique information of a wireless device, such as a MAC address, a service set identifier (SSID), or a channel, is forged, and determining that the wireless device is a fake device when the pieces of forged information contradict each other. Accordingly, if a fake device forges all its own pieces of information without a contradiction, it may be difficult to determine whether the device is the fake device with the technology disclosed in the registered Korean patent. However, even in this case, the method of the present disclosure can exactly determine whether the device is the fake device. This is because the fake device may forge information such as a MAC address, an SSID, or a channel, but cannot forge firmware.

A method for detecting whether a wireless device is a fake device according to an embodiment may include: a step of attacking a vulnerable point that a target wireless device which is a target for determining a fake device has; and a step of determining whether the target wireless device is a fake device, according to whether the attack on the vulnerable point of the target wireless device succeeds.

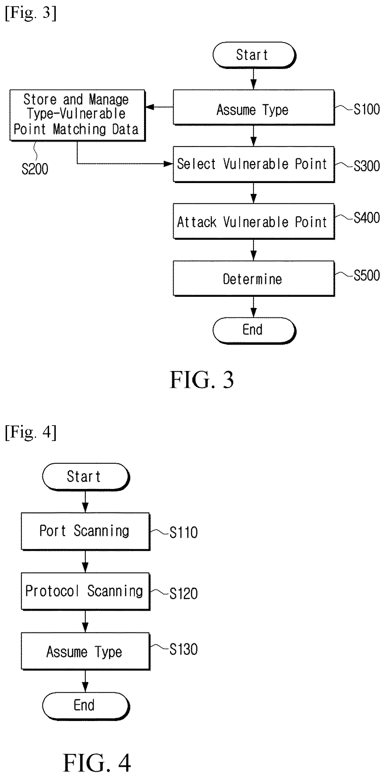

Hereinafter, a method for detecting whether a wireless device is a fake device according to an embodiment will be described with reference to FIG. 3.

Referring to FIG. 3, the method for detecting whether the wireless device is the fake device according to an embodiment may include: a step of assuming a type of a target wireless device (S100); a step of selecting a vulnerable point according to the type of the target wireless device, which is a target for determining a fake device (S300); a step of attacking the vulnerable point selected at step S300 (S400); and a step of determining whether the target wireless device is a fake device, according to whether the attack on the target wireless device succeeds (S500).

The method for detecting whether the wireless device is the fake device according to an embodiment may further include a step of storing and managing wireless device type-vulnerable point matching data in which vulnerable points are matched with types of wireless devices (S200).

The step of selecting the vulnerable point (S300) described above may be a step of selecting a vulnerable point that the type of the target wireless device assumed at the step of assuming (S100) has.

The step of selecting the vulnerable point (S300) described above may be a step of selecting at least one vulnerable point that the type of the target wireless device has, by referring to the wireless device type-vulnerable point matching data.

The step of attacking the target wireless device (S400) described above may be a step of generating a vulnerable point attacking message for attacking the vulnerable point selected at the step of selecting the vulnerable point (S300) according to the type of the target wireless device, and transmitting the vulnerable point attacking message to the target wireless device.

The step of determining whether the target wireless device is the fake device (S500) as described above may be a step of determining that the target wireless device is not the fake device when the target wireless device responds to the vulnerable point attacking message, and determining that the target wireless device is the fake device when the target wireless device does not respond to the vulnerable point attacking message.

Hereinafter, the method for detecting whether the wireless device is the fake device according to an embodiment will be described, on the assumption that the method for detecting whether the wireless device is the fake device according to an embodiment is applied to the system described with reference to FIGS. 1 and 2.

Regarding the step of assuming the type of the target wireless device (S 100), reference may be made to the detailed descriptions of FIG. 4.

The step of storing and managing the type-vulnerable point matching data (S200) is a step of storing and managing, by the wireless device care apparatus 100, the result of the step of assuming the type of the target wireless device (S100) on a recording medium. The step S 100 may be performed by a computer (not shown) other than the wireless device care apparatus 100.

The step of selecting the vulnerable point (S300) is a step of selecting, by the wireless device care apparatus 100, the vulnerable point according to the type of the target wireless device. For example, the vulnerable point attacking unit 110 may select the vulnerable point according to the type of the target wireless device assumed by the type assumption unit 104. To achieve this, type-vulnerable point matching data may be stored in the storage device 113, and the vulnerable point attacking unit 110 may select the vulnerable point corresponding to the type of the target wireless device with reference to the type-vulnerable point matching data.

The step of attacking the target wireless device (S400) is a step of attacking, by the wireless device care apparatus 100, the vulnerable point of the target wireless device. For example, the wireless device care apparatus 100 transmits a vulnerable point attacking message to the target wireless device. The vulnerable point attacking message may be generated based on the vulnerable point data selected according to the type of the target wireless device. The wireless device care apparatus 100 may directly generate the vulnerable point attacking message.

At the step of determining whether the target wireless device is the fake device (S500), the determination unit 108 of the wireless device care apparatus 100 may determine that the target wireless device is not the fake device when the target wireless device responds to the vulnerable point attacking message, and may determine that the target wireless device is the fake device when the target wireless device does not respond to the vulnerable point attacking message.

Hereinafter, variation examples of the method for detecting whether the wireless device is the fake device according to an embodiment, described above with reference to FIG. 3, will be described.

The method for detecting whether the wireless device is the fake device according to an embodiment, described above with reference to FIG. 3, may be implemented by a computer program. That is, a program for executing all or some of the steps constituting the method for detecting whether the wireless device is the fake device according to an embodiment, described above with reference to FIG. 3, in the wireless device care apparatus, may be stored in a computer-readable recording medium. The program for executing all or some of the steps constituting the method according to an embodiment in the wireless device care apparatus 100, which is stored in the recording medium, may be loaded into the memory 115 and executed under control of the computer processor 111.

For example, according to an embodiment, there is provided a computer-readable recording medium having a program recorded thereon to execute a fake device detection method in the wireless device care apparatus 100, the fake device detection method including: a step of attacking a vulnerable point of a target wireless device, which is a target for determining a fake device; and a step of determining whether the target wireless device is a fake device according to whether the attack on the vulnerable point of the target wireless device succeeds.

In another example, there is provided a computer-readable recording medium having a program recorded thereon to execute a fake device detection method in the wireless device care apparatus 100, the fake device detection method including: a step of assuming a type of a target wireless device (S 100); a step of selecting a vulnerable point according to the type of the target wireless device which is a target for determining a fake device (S300); a step of attacking the vulnerable point selected at step S300 (S400); and a step of determining whether the target wireless device is a fake device according to whether the attack on the target wireless device succeeds (S500).

FIG. 4 is a view provided to explain a method for determining a type of a wireless device according to an embodiment.

Referring to FIG. 4, the method for determining the type of the wireless device according to an embodiment may include: a port scanning step (S110) of finding an open port of a wireless device; a protocol scanning step (S120) of finding a protocol used in the open port found as a result of performing the port scanning step (S110); and a type assumption step (S130) of assuming a type of the wireless device, based on the results of the above-described scanning steps (S 110, S120).

Hereinafter, the method for determining the type of the wireless device according to an embodiment will be described, on the assumption that the method for determining the type of the wireless device according to an embodiment is applied to the system described above with reference to FIGS. 1 and 2.

The port scanning step (S110) is finding open ports of the wireless devices 3, 5. That is, the port scanning step (S110) is a step of performing the port scanning operation described above with reference to FIGS. 1 and 2.

In the present embodiments, for the purpose of explaining the present disclosure, it is assumed that the open port of the wireless terminal 5a is port number 80, the open port of the wireless terminal 5b is port number 23, the open port of the wireless terminal 5c is port number 5555, and the open port of the wireless terminal 5d is port number 5559.

The port scanning step (S110) is finding open ports of the wireless terminals 5. For example, as a result of performing the port scanning step (S110), it may be found that that the open port of the wireless terminal 5a is port number 80, the open port of the wireless terminal 5b is port number 23, the open port of the wireless terminal 5c is port number 5555, and the open port of the wireless terminal 5d is port number 5559.

The protocol scanning step (S120) is a step for finding a type of a protocol actually used in the open port. That is, the protocol scanning step (S120) is a step of performing the protocol scanning operation described above with reference to FIGS. 1 and 2. The open port is obtained as a result of performing the port scanning step (S 110).

For example, the protocol scanning step (S120) performs an operation of finding a type of a protocol used in port number 80 which is the open port of the wireless terminal 5a. In addition, the protocol scanning step (S120) performs an operation of finding what the protocol used in port number 23 of the wireless terminal 5b is, what the protocol used in port number 5555 of the wireless terminal 5c is, and what the protocol used in port number 5559 of the wireless terminal 5d is. As described above, the protocol scanning step (S120) is a step of finding the types of the protocols actually used in all open ports of the wireless terminals 5.

The protocol scanning step (S120) includes a step of identifying a type of the open port, a step of creating a protocol identification packet, a step of transmitting the protocol identification packet to the wireless device having the open port, and a step of identifying whether there is a response from the wireless device to which the protocol identification packet is transmitted. The step of identifying the type of the open port is a step of performing the operation of identifying the type of the open port described above, the step of creating the protocol identification packet is a step of performing the operation of creating the protocol identification packet described above, and the step of identifying whether the response is received from the wireless device is a step of performing the operation of identifying whether the response is received from the wireless device as described above. Accordingly, a detailed description of these steps is omitted.

The step of identifying the type of the open port performs an operation of identifying whether the open port obtained by the port scanning operation corresponds to a well-known port, a registered port, or a dynamic port.

According to an embodiment, the step of identifying the type of the open port performs an operation of finding the type of the open port obtained by the port scanning operation by referring to port-type data.

According to an embodiment, the step of creating the protocol identification packet performs an operation of creating the protocol identification packet according to the type of the open port.

For example, the step of creating the protocol identification packet performs an operation of creating the protocol identification packet by using a web HTTP protocol, since port number 80 of the wireless device 5a uses the world wide web HTTP protocol and is the well-known port.

In addition, the step of creating the protocol identification packet performs an operation of determining that port number 80 of the wireless device 5a does not use the web HTTP protocol when there is no response to the protocol identification packet created by using the web HTTP protocol from the wireless device 5a, and of creating a protocol identification packet by using a different protocol other than the world wide web HTTP protocol.

That is, the step of creating the protocol identification packet creates the protocol identification packet until a response is received as in the above-described operations, in order to find the type of the protocol actually used in the open ports of the wireless devices 5.

The step of transmitting the protocol identification packet to the wireless device performs an operation of transmitting the protocol identification packet to the wireless device until a response is received from the wireless device.

The step of identifying whether there is the response from the wireless device to which the protocol identification packet is transmitted performs an operation of monitoring whether a response to the protocol identification packet is received from the wireless device, and, when the response is received, determining that a protocol used in the response is the protocol actually used in the corresponding open port.

The type assumption step (S130) is a step of performing the type assumption operation of assuming the respective types of the wireless devices 5, by using at least one result of the result of performing the port scanning step (S110) and the result of performing the protocol scanning step (S120). That is, the type assumption step (S130) is a step of performing the type assumption operation described above with reference to FIGS. 1 and 2.

According to an embodiment, the type assumption step (S130) includes a step of assuming a type of a service from the type of the protocol found as a result of performing the protocol scanning operation, and a step of assuming the type of the wireless device from the type of the service. The step of assuming the type of the service from the type of the protocol is a step of performing the operation of assuming the type of the service from the type of the protocol as described above, and the step of assuming the type of the wireless device from the type of the service is a step of performing the operation of assuming the type of the wireless device from the type of the service as described above. Accordingly, regarding these steps, reference may be made to the descriptions of the embodiments of FIGS. 1 and 2.

As described above, the response to the protocol identification packet may include at least one of banner information and service information of the wireless device.

According to an embodiment, the type assumption step (S130) uses at least one of the banner information and the service information of an IoT device, and at least one result of the result of performing the port scanning operation and the result of performing the protocol scanning operation described above.

For example, the type assumption step (S 130) may perform a first assumption operation, a second assumption operation, a comparison operation, and a type determination operation. Regarding the first assumption operation, the second assumption operation, the comparison operation, and the type determination operation, reference may be made to the detailed descriptions of the embodiments of FIGS. 1 and 2.

In another example, the type assumption step (S130) may perform a port scanning operation, a protocol scanning operation, a type assumption operation, and a reliability calculation operation. Regarding the first assumption operation, the second assumption operation, the comparison operation, the type determination operation, and the reliability calculation operation, reference may be made to the detailed descriptions of the embodiments of FIGS. 1 and 2.

The method for determining the type of the wireless device according to an embodiment, described above with reference to FIG. 4, may be implemented by a computer program. That is, a program for executing all or some of the steps constituting the method for determining the type of the wireless device according to an embodiment, described above with reference to FIG. 4, in the wireless device care apparatus, may be stored in a computer-readable recording medium. The program for executing all or some of the steps constituting the method according to an embodiment in the wireless device care apparatus 100, which is stored in the recording medium, may be loaded into the memory 115 and executed under control of the computer processor 111.

For example, according to an embodiment, there is provided a computer-readable recording medium having a program recorded thereon to execute a method for determining a type of a wireless device in the wireless device care apparatus 100, the method including: a port scanning step (S 1 10) of finding an open port of a wireless device; a protocol scanning step (S120) of finding a protocol used in the open port found as a result of performing the port scanning step (S 110); and a type assumption step (S130) of assuming a type of the wireless device, based on results of the scanning steps (S1 10, S 120) described above. Regarding these steps, reference may be made to the detailed descriptions provided above.

## Claims

1. A method for detecting a fake device, the method comprising:
a step of assuming (S100) a type of a target wireless device which is a target for determining a fake device;
a step of selecting (S300) a vulnerable point corresponding to the type assumed at the step of assuming (S100);
a step of attacking (S400) the vulnerable point of the target wireless device, wherein the step of attacking (S400) the vulnerable point of the target wireless device comprises generating a vulnerable point attacking message for attacking the vulnerable point selected at the step of selecting (S300) the vulnerable point, and transmitting the vulnerable point attacking message to the target wireless device; and
a step of determining (S500) that the target wireless device is a fake device, when the attack on the vulnerable point of the target wireless device does not succeed.

2. The method of claim 1, further comprising a step of storing and managing wireless device type-vulnerable point matching data (S200) in which vulnerable points are matched with types of wireless devices,
wherein the step of selecting (S300) the vulnerable point comprises selecting a vulnerable point corresponding to the type of the target wireless device with reference to the wireless device type-vulnerable point matching data.

3. The method of claim 1 or 2, wherein the step of determining (S500) whether the target wireless device is the fake device comprises determining whether the target wireless device is not the fake device when the target wireless device responds to the vulnerable point attacking message, and determining that the target wireless device is the fake device when the target wireless device does not respond to the vulnerable point attacking message.

4. A wireless device care system for detecting a fake device, the system comprising:
a type assumption unit (104) configured to assume a type of a target wireless device which is a target for determining a fake device;
a vulnerable point attacking unit (110) configured to select a vulnerable point corresponding to the type assumed at the type assumption unit and to attack a vulnerable point according to the type of the target wireless device, wherein the vulnerable point attacking unit (110) is further configured to generate a vulnerable point attacking message for attacking the selected vulnerable point, and to transmit the vulnerable point attacking message to the target wireless device; and
a determination unit (108) configured to determine that the target wireless device is the fake device, when the attack on the target wireless device does not succeed.

5. The wireless device care system of claim 4, further comprising:
a memory device (115) configured to store and manage wireless device type-vulnerable point matching data in which vulnerable points are matched with types of wireless devices,
wherein the vulnerable point attacking unit (110) is configured to attack the vulnerable point corresponding to the type of the target wireless device with reference to the wireless device type-vulnerable point matching data.

6. The wireless device care system of claims 4 or 5, wherein the determination unit (108) is configured to determine that the target wireless device is not the fake device when the target wireless device responds to the attack on the vulnerable point, and to determine that the target wireless device is the fake device when the target wireless device does not respond to the attack on the vulnerable point.

## Patentansprüche

1. Verfahren zum Erfassen eines gefälschten Gerätes, wobei das Verfahren umfasst:
einen Schritt (S100), in dem ein Typ eines drahtlosen Ziel-Gerätes angenommen wird, das ein Ziel zum Bestimmen eines gefälschten Gerätes ist;
einen Schritt (S300), in dem ein anfälliger Punkt ausgewählt wird, der dem in dem Schritt (S100) des Annehmens angenommenen Typ entspricht;
einen Schritt (S400), indem der anfällige Punkt des drahtlosen Ziel-Gerätes angegriffen wird, wobei der Schritt (S400), in dem der anfällige Punkt der drahtlosen Zielvorrichtung angegriffen wird, Erzeugen einer Nachricht über Angriff auf den anfälligen Punkt zum Angreifen des in dem Schritt (S300) zum Auswählen des anfälligen Punktes ausgewählten anfälligen Punktes, sowie Übertragen der Nachricht über Angriff auf den anfälligen Punkt zu dem drahtlosen Ziel-Gerät umfasst; und
einen Schritt (S500), in dem festgestellt wird, dass das drahtlose Ziel-Gerät ein gefälschtes Gerät ist, wenn der Angriff auf den anfälligen Punkt des drahtlosen Ziel-Gerätes nicht erfolgreich ist.

2. Verfahren nach Anspruch 1, das des Weiteren einen Schritt (S200) umfasst, in dem Daten zum Abgleichen zwischen dem Typ des drahtlosen Gerätes und dem anfälligen Punkt gespeichert und verwaltet werden, in denen anfällige Punkte mit Typen von drahtlosen Geräten abgeglichen werden,
wobei der Schritt (S300) zum Auswählen des anfälligen Punktes Auswählen eines dem Typ des drahtlosen Ziel-Gerätes entsprechenden anfälligen Punktes unter Bezugnahme auf die Daten zum Abgleichen zwischen dem Typ des drahtlosen Gerätes und dem anfälligen Punkt umfasst.

3. Verfahren nach Anspruch 1 oder 2, wobei der Schritt (S500), in dem festgestellt wird, ob das drahtlose Ziel-Gerät das gefälschte Gerät ist, umfasst, dass festgestellt wird, ob das drahtlose Ziel-Gerät nicht das gefälschte Gerät ist, wenn das drahtlose Ziel-Gerät auf die Nachricht über Angriff auf den anfälligen Punkt reagiert, und festgestellt wird, dass das drahtlose Ziel-Gerät das gefälschte Gerät ist, wenn das drahtlose Ziel-Gerät nicht auf die Nachricht über Angriff auf den anfälligen Punkt reagiert.

4. System für Wartung drahtloser Geräte zum Erfassen eines gefälschten Gerätes, wobei das System umfasst:
eine Einheit (104) für Annahme eines Typs, die so ausgeführt ist, dass sie einen Typ eines drahtlosen Ziel-Gerätes annimmt, das ein Ziel zum Bestimmen eines gefälschten Gerätes ist;
eine Einheit (110) zum Angreifen eines anfälligen Punktes, die so ausgeführt ist, dass sie einen anfälligen Punkt entsprechend dem an der Einheit (104) für Annahme eines Typs angenommenen Typ auswählt und einen anfälligen Punkt entsprechend dem Typ des drahtlosen Ziel-Gerätes angreift, wobei die Einheit (110) zum Angreifen eines anfälligen Punktes des Weiteren so ausgeführt ist, dass sie eine Nachricht über Angriff auf den anfälligen Punkt zum Angreifen des ausgewählten anfälligen Punktes erzeugt und die Nachricht über Angriff auf den anfälligen Punkt zu dem drahtlosen Ziel-Gerät überträgt; sowie
eine Feststellungs-Einheit (108), die so ausgeführt ist, dass sie feststellt, dass das drahtlose Ziel-Gerät das gefälschte Gerät ist, wenn der Angriff auf das drahtlose Ziel-Gerät nicht erfolgreich ist.

5. System für Wartung drahtloser Geräte nach Anspruch 4, das des Weiteren umfasst:
eine Speichervorrichtung (115), die so ausgeführt ist, dass sie Daten zum Abgleichen zwischen dem Typ des drahtlosen Gerätes und dem anfälligen Punkt speichert und verwaltet, in denen anfällige Punkte mit Typen von drahtlosen Geräten abgeglichen werden,
wobei die Einheit (110) zum Angreifen eines anfälligen Punktes so ausgeführt ist, dass sie den anfälligen Punkt, der dem Typ des drahtlosen Ziel-Gerätes entspricht, unter Bezugnahme auf die Daten zum Abgleichen zwischen dem Typ des drahtlosen Gerätes und dem anfälligen Punkt angreift.

6. System für Wartung drahtloser Geräte nach Anspruch 4 oder 5, wobei die Feststellungs-Einheit (108) so ausgeführt ist, dass sie feststellt, dass das drahtlose Ziel-Gerät nicht das gefälschte Gerät ist, wenn das drahtlose Ziel-Gerät auf den Angriff auf den anfälligen Punkt reagiert, und feststellt, dass das drahtlose Ziel-Gerät das gefälschte Gerät ist, wenn das drahtlose Ziel-Gerät nicht auf den Angriff auf den anfälligen Punkt reagiert.

## Revendications

1. Procédé de détection d'un faux dispositif, le procédé comprenant :
une étape de supposition (S100) qu'un type d'un dispositif sans fil cible constitue une cible pour une détermination d'un faux dispositif ;
une étape de sélection (S300) d'un point vulnérable correspondant au type supposé à l'étape de supposition (S100) ;
une étape d'attaque (S400) du point vulnérable du dispositif sans fil cible, dans lequel l'étape d'attaque (S400) du point vulnérable du dispositif sans fil cible comprend une génération d'un message d'attaque de point vulnérable pour attaquer le point vulnérable sélectionné à l'étape de sélection (S300) du point vulnérable, et une transmission du message d'attaque de point vulnérable au dispositif sans fil cible ; et
une étape de détermination (S500) que le dispositif sans fil cible est un faux dispositif, lorsque l'attaque sur le point vulnérable du dispositif sans fil cible échoue.

2. Le procédé de la revendication 1, comprenant en outre une étape de stockage et de gestion de données d'association point vulnérable-type de dispositif sans fil (S200) à laquelle des points vulnérables sont associés à des types de dispositifs sans fil,
dans lequel l'étape de sélection (S300) du point vulnérable comprend une sélection d'un point vulnérable correspondant au type du dispositif sans fil cible avec référence aux données d'association point vulnérable-type de dispositif sans fil.

3. Le procédé de la revendication 1 ou 2, dans lequel l'étape de détermination (S500) que le dispositif sans fil cible est ou non un faux dispositif comprend une détermination que le dispositif sans fil cible n'est pas le faux dispositif lorsque le dispositif sans fil cible réagit au message d'attaque de point vulnérable, et une détermination que le dispositif sans fil cible est le faux dispositif lorsque le dispositif sans fil cible ne réagit pas au message d'attaque de point vulnérable.

4. Système de gestion de santé pour dispositifs sans fil pour une détection d'un faux dispositif, le système comprenant :
une unité de supposition de type (104) configurée pour supposer un type d'un dispositif sans fil cible qui constitue une cible pour une détermination d'un faux dispositif ;
une unité d'attaque de point vulnérable (110) configurée pour sélectionner un point vulnérable correspondant au type supposé au niveau de l'unité de supposition de type et pour attaquer un point vulnérable selon le type du dispositif sans fil cible, dans lequel l'unité d'attaque de point vulnérable (110) est configurée en outre pour générer un message d'attaque de point vulnérable pour attaquer le point vulnérable sélectionné, et pour transmettre le message d'attaque de point vulnérable au dispositif sans fil cible ; et
une unité de détermination (108) configurée pour déterminer que le dispositif sans fil cible est le faux dispositif, lorsque l'attaque sur le dispositif sans fil cible échoue.

5. Le système de gestion de santé pour dispositifs sans fil de la revendication 4, comprenant en outre :
un dispositif de mémoire (115) configuré pour stocker et gérer des données d'association point vulnérable-type de dispositif sans fil dans lesquelles des points vulnérables sont associés à des types de dispositifs sans fil,
dans lequel l'unité d'attaque de point vulnérable (110) est configurée pour attaquer le point vulnérable correspondant au type du dispositif sans fil cible avec référence aux données d'association point vulnérable-type de dispositif sans fil.

6. Le système de gestion de santé pour dispositifs sans fil de la revendication 4 ou 5, dans lequel l'unité de détermination (108) est configurée pour déterminer que le dispositif sans fil cible n'est pas le faux dispositif lorsque le dispositif sans fil cible réagit à l'attaque sur le point vulnérable, et pour déterminer que le dispositif sans fil cible est le faux dispositif lorsque le dispositif sans fil cible ne réagit pas à l'attaque sur le point vulnérable.
